# EUROPÄISCHE PATENTANMELDUNG

(11) **EP 3 292 981 A1**
(43) Veröffentlichungstag der Anmeldung: **14.03.2018**
(21) Anmeldenummer: 16001957.6
(22) Anmeldetag: 08.09.2016
(51) Int. Cl.: B29C 47/68, B29C 47/08

(54) **VERFAHREN UND VORRICHTUNG ZUM FILTRIEREN VON VISKOSEN ODER HOCHVISKOSEN FLÜSSIGKEITEN, INSBESONDERE KUNSTSTOFFSCHMELZEN**

(71) Anmelder: Next Generation Analytics GmbH, 4710 Grieskirchen (AT)
(72) Erfinder: Kastner, Friedrich, 4710 Grieskirchen (AT)
(74) Vertreter: Landgraf, Elvira

(57) **Zusammenfassung**

Die Erfindung betrifft eine Vorrichtung und ein Verfahren zur Filtration von viskosen oder hochviskosen Flüssigkeiten, insbesondere Schmelzen, bei dem die Fitration mittels eines Filterbandes (3) erfolgt und verschmutztes Filterband (3) durch eine Entnahmevorrichtung (10) durch eine Linearbewegung aus der Filterkammer (4) entfernt und gleichzeitig neues Filterband (3) nachgeführt wird.

## Beschreibung

Die Erfindung betrifft ein Verfahren und eine Vorrichtung zum Filtrieren von viskosen oder hochviskosen Flüssigkeiten, insbesondere Kunststoffschmelzen unter Verwendung eines Bandfilters.

Zur Entfernung von Verunreinigungen von viskosen oder hochviskosen Flüssigkeiten, insbesondere Kunststoffschmelzen, werden nach dem Stand der Technik im Allgemeinen Filtriervorrichtungen unter Verwendung unterschiedlicher Filterausführungen eingesetzt.

Häufig auftretende Verunreinigungen von viskosen oder hochviskosen Flüssigkeiten, wie beispielsweise Kunststoffschmelzen sind beispielsweise organische oder anorganische Verunreinigungen, wie Metalle, mineralische Stoffe und dergleichen, oder Verunreinigungen durch andere Polymere, Fremdpartikel, zu grobe Zusatzstoffe und Additive sowie deren Agglomerate. Weitere störende Verunreinigungen sind beispielsweise Abbauprodukte der viskosen oder hochviskosen Flüssigkeit, die bei der Verwendung, der Produktion oder anderen sachgemäßen oder unsachgemäßen Verwendungen, beispielsweise bei zu hoher Temperaturbelastung oder bei der Herstellung z.B. bei Kunststoffen durch zu hohe oder zu niedrige Vernetzung, wie beispielsweise Gele, entstehen.

Als Filter werden dabei insbesondere Siebplatten oder auch Filterbänder, sogenannte Bandfilter verwendet.

In jedem Fall müssen die Öffnungen des entsprechenden Filters kleiner sein als die zurückzuhaltenden und von der viskosen oder hochviskosen Flüssigkeit abzutrennenden Verunreinigungen.

Dadurch nimmt der Verschmutzungsgrad der jeweiligen verwendeten Filtereinrichtung in Abhängigkeit vom Grad der Verunreinigung der viskosen oder hochviskosen Flüssigkeit und deren Durchsatz durch die Filtriervorrichtung mehr oder weniger rasch zu. Im schlimmsten Fall kann dies dazu führen, dass so gut wie keine Flüssigkeit mehr durch den Filter durchtreten kann.

In Abhängigkeit von der verwendeten Filterausführung muss dabei beispielsweise eine Siebplatte ausgetauscht oder rückgespült werden. Dabei kommt es unweigerlich zu einer Unterbrechung des Verfahrens während des Austausches der Siebplatte. Weiter gibt es kontinuierliche Verfahren, die die Siebe ständig durch Abschaben und/oder Rückspülen reinigen. Dabei kann aber nie vermieden werden, dass die Partikel durch den Reinigungsprozess, z.B. beim Abschaben, zerkleinert werden und dann den Filter passieren können. Weiterhin können Verschmutzungen selbst im Filter agglomerieren oder in den Filteröffnungen so fest gepresst werden, dass die Reinigung im Filter nicht mehr möglich wird.

Bei Verwendung eines Bandfilters wird beispielsweise das Filterband stückweise aus der Filtriervorrichtung heraus durch eine Bewegungseinheit weiterbewegt und neues Filterband nachgeführt.

Dabei wird das verschmutzte Filterband nach der Filtriervorrichtung aufgewickelt und neues Filterband von einer vor der Filtriervorrichtung situierten Abwickelvorrichtung nachgeführt, sodass dieses im Filtrierbereich positioniert wird.

Unter dem Filtrierbereich wird hier jener Bereich des Filterbandes verstanden, in dem die viskose oder hochviskose Flüssigkeit durch das Filterband durchtritt, also eine Abtrennung der Verunreinigungen erfolgt.

Unter viskosen oder hochviskosen Flüssigkeiten werden im Folgenden im Wesentlichen Schmelzen verstanden, insbesondere Kunststoffschmelzen.

Aufgabe der Erfindung war es eine Vorrichtung und ein Verfahren zum Filtrieren von viskosen oder hochviskosen Flüssigkeiten, insbesondere Kunststoffschmelzen bereitzustellen, bei dem eine im Wesentlichen kontinuierliche Verfahrensführung auch beim Filtrieren erreicht wird und bei der auf einfache Weise die Entfernung der Verschmutzungen bzw. eines verschmutzten Filterbandes bewirkt wird.

Gegenstand der Erfindung ist daher eine Filtriervorrichtung zum Filtrieren von viskosen oder hochviskosen Flüssigkeiten umfassend
- mindestens eine Zuführungseinheit für die viskose oder hochviskose Flüssigkeit,
- einen von Wandungen umschlossenen Innenraum, der die Filterkammer bildet, einen Zufluss und mindestens einen Abfluss für die viskose oder hochviskose Flüssigkeit aufweist, wobei der Bereich des Zuflusses und der Bereich des Abflusses durch ein Filterband getrennt sind.
- eine Zuführungsvorrichtung für das Filterband, die auf der Seite des Zuflusses situiert ist, wobei für die Zuführung eine in der Wandung vorgesehene Zutrittsöffnung vorgesehen ist,
- eine Vorrichtung zur Entnahme des Filterbandes auf der der Zuführung des Filterbandes gegenüberliegenden Seite, wobei für die Entnahme eine in der Wandung des Innenraums vorgesehene Austrittsöffnung vorgesehen ist, wobei die Vorrichtung zur Entnahme in Form eines Greifwerkzeugs ausgeführt ist, das eine Linearbewegung ausführt.

Die Filtriervorrichtung kann auch jeweils mehrere dieser Einheiten bzw. Vorrichtungen aufweisen.

Ein weiterer Gegenstand der Erfindung ist ein Verfahren zum Filtrieren von viskosen oder hochviskosen Flüssigkeiten, umfassend folgende Verfahrensschritte:
- Zuführen eines Filterbandes in eine Filtriervorrichtung, die mindestens eine Zuführungseinheit für die viskose oder hochviskose Flüssigkeit, einen von Wandungen umschlossenen Innenraum, der die Filterkammer bildet, die einen Zufluss und mindestens einen Abfluss für die viskose oder hochviskose Flüssigkeit aufweist, wobei der Bereich des Zuflusses und der Bereich des Abflusses durch ein Filterband getrennt sind, eine Zuführungsvorrichtung für das Filterband, die auf der Seite des Zuflusses situiert ist, wobei für die Zuführung eine in der Wandung vorgesehene Zutrittsöffnung vorgesehen ist, eine Vorrichtung zur Entnahme des Filterbandes auf der der Zuführung des Filterbandes gegenüberliegenden Seite, wobei für die Entnahme eine in der Wandung des Innenraums vorgesehene Austrittsöffnung vorgesehen ist, aufweist,
- tangentiales Anströmen der viskosen oder hochviskosen Flüssigkeit in eine Filtriervorrichtung in der Weise, dass die Filterfläche zumindest nahezu gleichmäßig und vollflächig von der viskosen oder hochviskosen Flüssigkeit bedeckt und mit den Verunreinigungen belegt wird,
- Abführen der durch die Filtervorrichtung hindurchgetretenen viskosen oder hochviskosen Flüssigkeit,
- Ab- oder Rückführen der nicht durch das Filtersystem hindurchgetretenen viskosen oder hochviskosen Flüssigkeit,
- Entnahme des verschmutzen Filterbandes durch die Vorrichtung zur Entnahme, die in Form eines Greifwerkzeugs ausgeführt ist, wobei die Entnahme durch eine Linearbewegung des Greifwerkzeugs erfolgt
- ggf. Abschneiden des Filterbandes durch eine Schneidvorrichtung
- Abführung und/oder Entnahme von nicht durch das Filtersystem hindurchgetretenen Verunreinigungen.

Durch die erfindungsgemäße Vorrichtung und das erfindungsgemäße Verfahren kann ein Austausch des verschmutzen Filterbandes während des kontinuierlichen Betriebs ohne Störung des Filtriervorgangs erfolgen.

Der Vorteil eines Siebwechslers liegt darin, dass nicht wie bei anderen Filtersystemen ein Sieb oder eine Siebplatte ständig über einen beispielsweise. rotierenden Schaber gereinigt werden muss. Dabei werden durch den rotierenden Schaber die Filtrationsrückstände teilweise zerkleinert und können dann das Sieb passieren.

Auch bei häufig verwendeten Rückspülsystemen, bei denen ein Sieb oder ein Filterband immer wieder durch einen Gegenstrom gereinigt wird, erfolgt die Reinigung des Filters nie vollständig und Material wird dabei zerkleinert. Außerdem bleibt oft das Reinigungsmedium am Filter zurück und wird in der Zeit bis zum nächsten Einsatz des Filters oft thermisch abgebaut.

Durch den erfindungsgemäßen Austausch des Filterbands und Zuführung einer neuen Fläche des Filterbands können diese Nachteile vermeiden werden. Zudem kann das Filterband, da es nur einmal verwendet wird, wesentlich kostengünstiger hergestellt werden, da die Anforderung an die Haltbarkeit und Beständigkeit nicht so hoch sind, wie bei mehrfach verwendeten Filterbändern.

Wesentlich ist, dass im Betrieb die Filterfläche möglichst gleichmäßig und vollständig benutzt und mit Verunreinigungen belegt wird. Wichtig ist hier auch während der Filtration sogenannte Totzonen zu vermeiden, die dazu führen können, dass insbesondere empfindliche Medien durch zu lange Verweilzeiten thermisch oder mechanisch zu stark belastet werden und damit das Filtrationsergebnis verschlechtern würden. Dies wird durch die tangentiale Anströmungsgeometrie, die daraus resultierenden kleinen Schmelzevolumen im Filter ausgezeichnet und so gut wie vollständig gewährleistet.

Diese Bedingung wird erfüllt, wenn der durch den Fluss der Flüssigkeit auf die Fläche des Filters ausgeübte Druck P(F) kleiner ist als der Druck des Flusses dieser Flüssigkeit auf eine Fläche orthogonal zur Strömungsrichtung der Flüssigkeit P(S), und insbesondere P(F)/P(S) < 90%, besonders bevorzugt P(F)/P(S) < 70%, gilt.

Es sind bereits Vorrichtungen bekannt, bei denen das Filterband entweder durch einen Schmelzeleckstrom, also durch eine durch die Austrittsöffnung des Filterbandes austretende Schmelze, oder aktiv durch ein Zahnwalzensystem gezogen wird.

Das Ziehen des Filterbandes durch den Schmelzelecksstrom ist für die üblichen Produktionsgeschwindigkeiten zu langsam und nur für wenig verschmutzte Filterbänder geeignet. Die aktive Bewegung des Filterbandes durch ein Zahnwalzensystem ist mechanisch extrem aufwändig, zudem sind relativ große Baueinheiten notwendig um das verschmutzte Filterband effektiv aus der Filterkammer zu entfernen.

Gemäß der erfindungsgemäßen Ausführung wird das Filterband durch eine lineare Abzugseinheit je nach Ausführung in einer ganzen oder einer teilweisen Filterbreite, also mit einem Hub oder mehreren Teilhüben, durch die Filterkammer gezogen.

Das Filterband kann aus einer oder mehr Schichten bestehen. In der Regel ist das Filterband ein Bandsieb, also ein mit Löchern versehenes Trägermaterial beispielsweise aus Metallen, beispielsweise Stahl, Mineralien oder Kunststoff. Es kann sich aber auch um ein Gewebefilter sowie alle anderen bekannten bandförmigen Filtermedien handeln, die zur Filtrierung geeignet sind. Bevorzugte Filter umfassen Gewebe, Gewirke, Vliese, genadelte Filtermaterialien, kalandrierte Filtermaterialien und Stapelfaservliese, insbesondere aus Metallen, Mineral-, Natur- und Kunstfasern.

Bevorzugt sind auch gelaserte, geätzte, gestanzte oder genadelte Bänder aus Folien, Vliesen aus Kunststoffen, Metallen, Mineralfasern oder Papieren oder Kombinationen zweier oder mehrerer der vorgenannten Filter.

Es werden Gewebe, Gewirke aus Metallen oder Legierungen und/oder Natur- oder Kunstfasern oder Mineralfasern bevorzugt.

Dabei können die Gewebe oder Gewirke auch aus Materialmischungen bestehen, also unterschiedliche Fäden eingesetzt werden. In einer weiteren Ausführungsform können die unterschiedlichen Gewebe oder Gewirke auch übereinander angeordnet werden, wobei eine Schichtung mit unterschiedlichen Feinheiten bevorzugt ist. Die Gewebe oder Gewirke können auch Verstärkungen beinhalten um höhere Zugkräfte bei gleichzeitig feiner Filtration zu gewährleisten. In einer weiteren Ausführungsform können Bänder aus Metallen, Kunststoffen und dergleichen in Form von Verbundmaterialien oder in Verbunden mit Geweben eingesetzt werden. Die Bänder können dabei einzeln vorher oder in diesem Verbund gestanzt, gebohrt, geätzt, geprägt, gelasert oder genadelt werden und auch aus Kombinationen der Technologien hergestellt sein.

Außerdem ist es möglich im Prozess der Verlegung der Bänder vor der Filtration aktive oder passive Filtersubstanzen oder Katalysatoren als Pulver, Paste, Folie, Gewebe oder Beschichtung auf oder zwischen die Filterbänder einzubringen um z.B. Gerüche in der Schmelze zu reduzieren oder die Medien aktiv in ihren Eigenschaften zu beeinflussen.

Die erfindungsgemäße Vorrichtung umfasst einen von Wandungen umschlossenen Innenraum, der auch als Filterkammer bezeichnet wird. Die Filterkammer weist einen Zufluss und einen Abfluss für eine Schmelze auf, wobei Zufluss und Abfluss durch das Filterband getrennt werden. Bevorzugt befinden sich Zufluss und Abfluss an der gleichen Seite oder an gegenüberliegenden Seiten der Filterkammer.

Der Bereich des Filterbandes, in dem die Filtration stattfindet, wird im Folgenden als Filtrierbereich bezeichnet.

Die Filterkammer ist so gestaltet, dass das Filterband hindurchgeführt wird und den Innenraum in zwei Bereiche, einen Zuflussbereich und einen Abflussbereich, unterteilt. Dort, wo das Filterband in den Innenraum eintritt, und dort, wo es aus diesem austritt, befinden sich um die jeweiligen Öffnungen für den Durchtritt des Filterbandes in der Filterkammer Dichtelemente in der Filterkammer oder an deren Wandung oder an der Außenseite der Filterkammer.

Bevorzugt umfassen diese Dichtelemente Keile, Pressleisten oder Rollen, die z.B. hydraulisch, elektrisch, pneumatisch, mechanisch oder durch den Schmelzedruck angepresst werden. Weiters können hier Elemente vorgesehen sein, welche die Schmelze an einem engen Austrittsspalt des Filterbandes erhitzen bzw. kühlen. Auf diese Weise bildet ein Teil der Schmelze selbst das Dichtelement. Durch die Heiz- bzw. Kühlelemente wird die Schmelze graduell erweicht bzw. erstarrt, sodass die Viskosität hoch genug ist, um den Druck über die Spaltlänge der Austrittsspalts des Filterbandes abzufangen.

Bevorzugte Heizelemente sind Heizbänder, Heizpatronen, Fluidkanäle, die Heizflüssigkeiten, wie Wasser oder Öl enthalten, Peltierelemente, Strahlungsquellen, beispielsweise IR Elemente, Heizgebläse, die Wärme mittels einer Gasströmung direkt oder indirekt über Wärmeleitelemente einbringen, wie beispielsweise Heatpipes, Wärmerohre oder hoch wärmeleitfähige Materialien. Bevorzugte Kühlelemente entsprechen den bevorzugten Heizelementen mit dem Unterschied, dass sie kühlen statt heizen. Es können dabei Wärmeleiter verwendet werden, die auch für die Heizelemente verwendet werden, wobei die Wärmeleiter einmal mit Wärme, d.h. mit einem Heizelement und einmal mit Kälte d.h. mit einem Kühlelement in Verbindung gebracht werden. Bevorzugt sind Kühlbänder, Kühlpatronen, Fluidkanäle, die Kühlflüssigkeiten, wie Wasser oder Öl enthalten, Peltierelemente, Kühlgebläse, welche Kälte mittels einer Gasströmung direkt oder indirekt über Wärmeleitelemente einbringen.

Bevorzugt ist in der Filterkammer eine Stützstruktur für das Filterband vorgesehen, damit dieses stabil in der Filterkammer geführt werden kann und sich im Einsatz nicht verformt.

Bevorzugt ist hier ein Grill, der außer der Stützfunktion auch eine besondere Gleitfähigkeit des Siebes bei der Bewegung erlaubt. Insbesondere kann diese Stützstruktur beheizbar oder kühlbar sein. Ferner kann die Stützstruktur mit einer Antihaftschicht versehen sein, die beispielsweise TiN oder Chrom, DLC, Chrom mit Teflon oder Nickel mit Teflon bestehen kann.

Die Stützstruktur weist Öffnungen auf, um ein ungehindertes Abfließen des filtrierten Materials zu ermöglichen. Vorzugsweise sind die Öffnungen derart auf die Öffnungsweite des Filterbandes abgestimmt, dass optimales Verhältnis aus Festigkeit und Materialdurchsatz erreicht wird.

Das Einbringen des Filterbandes in die Filterkammer erfolgt durch einen schmalen Spalt, der insbesondere von innen nach außen gekühlt bzw. auf je nach Viskosität des verwendeten Materials gewählter Temperatur bzw. mehreren Temperaturzonen gehalten wird.

Die Kunststoffschmelze dichtet im Falle einer Kühlung nach außen ab, da die Viskosität der Schmelze steigt.

Eine weitere bevorzugte Dichtung wird mit hydraulisch beaufschlagten Schiebern oder Exzenterrollen erreicht, die insbesondere so gestaltet sind, dass sie über Hydraulikzylinder mit Druck beaufschlagt werden. Alternativ kann der Schmelzedruck diese Schieber oder Exzenterrollen auf das Sieb drücken. .Alternativ zur hydraulischen Betätigung der Dichtvorrichtungen können diese Elemente aber auch durch Druckluft, mechanisch oder elektrisch betätigt werden.

Der Einlaufweg für das Filterband im Bandfilter kann vorzugsweise wellenförmig oder mit mehreren hintereinander liegenden Schiebern oder Rollen gedichtet werden.

Geeignete Zuflüsse und Abflüsse für die zu filtrierende bzw. filtrierte viskose oder hochviskose Flüssigkeit sind bekannt und stellen im einfachsten Falle lediglich Öffnungen im Innenraum dar. Der Zufluss mündet im Zuflussbereich der Filterkammer und der Abfluss im Abflussbereich der Filterkammer.

Gemäß einer bevorzugten Ausführungsform kann auch der Zuflussbereich einen Primärschmelze-Abfluss umfassen, der zur Druckminderung der Schmelze auf das Sieb oder der Ausführung von Verunreinigungen oder zur Entgasung der Schmelze dienen kann.

Die Positionen für Zufluss und Abfluss der Schmelze sind vorzugsweise seitlich der Filterkammer angeordnet oder an deren Ober- bzw. Unterseiten jedoch dort am Rand der Filterkammer.

Bevorzugt liegen Zufluss und Abfluss jeweils an gegenüberliegenden Seiten der Filterkammer. Dies hat den Vorteil, dass Schmelze in der Filterkammer nahezu tangential über große Teile des Filterbands, bevorzugt mehr als 50%, strömt, was eine sehr gute Filtrierung zur Folge hat. Zudem ermöglicht diese Bauform eine Stapelung oder serienmäßige Anordnung mehrerer Bandfilter. Zudem ergeben sich immer die gleichen Weglängen im Schmelzefluss, wodurch Verdrängerkörper, die im Stand der Technik oft eine gleichmäßige Siebnutzung bewirken, eingespart werden können.

Bevorzugt sind Zufluss und Abfluss bezüglich einer Raumrichtung parallel zur Breitenausdehnung der Filterposition um nicht mehr als 45° geneigt, insbesondere um weniger als 20°, besonderen Fällen weniger als 2°, wobei dies die Neigung der Fließrichtung darstellt, also die Längsachse von Zufluss/Abfluss.

Gemäß einer bevorzugten Ausführungsform sind Zufluss und/oder Abfluss so angeordnet, dass sich die einströmende bzw. ausströmende Schmelze parallel oder orthogonal zu derjenigen Richtung bewegt, in der das Filterband bei einem Wechsel der Filterfläche verschoben wird.

Es ist aber auch möglich Zufluss und Abfluss der Schmelze an der Ober- bzw. Unterseite der Filterkammer anzuordnen, beispielsweise im jeweiligen Randbereich der Filterkammer.

Der Zufluss und/oder Abfluss kann dabei auch beispielsweise jeweils symmetrisch in der Mitte über dem Filterband situiert sein.

Im Innenraum, insbesondere direkt nach dem Zufluss und/oder direkt vor dem Abfluss kann der Bandfilter gegebenenfalls Verteiler oder Strömungsrichtelemente, vorzugsweise Kleiderbügelverteiler, Torpedokörper oder modifizierte Trägerplatten, aufweisen. Dies ist aber bei der angestrebten tangentialen Anströmung des Filterbandes nicht erfoderlich.

Bevorzugt befindet sich der Zufluss oben und der Abfluss unten. Dadurch sinken die Verunreinigungen durch die Gravitation und den vorherrschenden Schmelzefluss automatisch nach unten und können durch einen zusätzlichen Primärschmelze-Abfluss, der im Zuflussbereich situiert ist, zielgerichtet abgeführt werden.

Der Bandfilter kann in der Filterkammer zusätzlich eine Ausführeinheit umfassen, die aktiv Schmelze aus dem Innenraum durch den Primärschmelze-Abfluss leitet. Diese Ausführeinheit kann beispielsweise durch Förderschnecken, Saugvorrichtungen, Pressen, Schieber und Spüldüsen realisiert werden.

Mit der Ausführeinheit können Verunreinigungen aus der Filterkammer entfernt werden. Somit ist es möglich, denjenigen Bereich des Filters, der die größte Kontamination mit Verschmutzungen aufweist, während der Schmelzefiltrierung aus dem Innenraum zu bewegen und saubere Breiche des Filterbandes auf der anderen Seite nachfolgen zu lassen. Dies entspricht einem Filtertransport während des Betriebs und ermöglicht damit eine kontinuierliche Filtrierung. Durch die Ausführung von Verunreinigungen wird die Konzentration an Verschmutzung im Innenraum nicht ansteigen.

Die Geometrie einer als Schnecke ausgeführten Ausführeinheit ist vom verwendeten Filtermaterial, der Art der bestimmungsgemäß erwarteten Verschmutzung und der gefilterten viskosen oder hochviskosen Flüssigkeit abhängig. Die dazu verwendeten Elemente müssen hart genug sein um nicht zu verschleißen und bei den herrschenden Temperaturen formstabil bleiben.

Die betreffenden Elemente der Ausführeinheit bestehen bevorzugt aus temperaturstabilen Kunststoffen, Keramik, Glas und Metall. und weisen insbesondere zusätzlich eine Oberflächenbeschichtung oder Panzerung auf, wie sie bekannte und handelsübliche Extruderschnecken aufweisen.

Bevorzugt ist dabei eine Oberflächenbeschichtung mittels Härten, Plasma-Nitrieren, Verchromen, Vernickeln, wobei Schichten umfassend DLC (diamond like carbon), Carbide, CrN oder TiN für die Oberflächen bevorzugt sind. Für die Oberflächenbeschichtung ist eine Plasmabeschichtung oder Flammbeschichtung bevorzugt.

Gemäß einer bevorzugten Ausführungsform sind auch andere Elemente des Bandfilters, beispielsweise die Filterkammer oder Durchflüsse oder das Filterband, auf diese Weise oberflächenbeschichtet, um diese vor mechanischer Beschädigung zu schützen.

Bevorzugt umfasst der Bandfilter auch speziell gehärtete oder beschichtete Einsätze, mittels derer bestimmte Zonen im Filter, auf die die Strömung besonders auftrifft und damit oft vermehrte Verunreinigungen in diesen Bereichen abgelagert werden, die abrasiv wirken könnten, zusätzlich geschützt werden können. Diese Einsätze sind bezüglich des Schmelzestroms vor den betreffenden Zonen angeordnet.

In dem Falle, dass als Ausführeinheit eine Schnecke verwendet wird, ist diese bevorzugt so gestaltet, dass sie im Bereich des Filterbandes steilere Gänge aufweist als in dem Bereich, in dem sie austrägt. Dies hat den Vorteil, dass die Verunreinigungen vom Filterband durch die steilen Gänge gut und zügig abtransportiert werden und in dem Bereich, in dem die Verunreinigungen ausgetragen werden, durch die flacheren Gänge den Druck der verunreinigten Schmelze abbauen kann.

Bevorzugt ist der Primärschmelzeabfluss mit der Ausführeinheit, beispielweise einem Rohr, welches eine Reinigungsschnecke führt, senkrecht zur Filterbahn angeordnet. Wird eine Förderschnecke verwendet, ist diese bevorzugt derart geformt, dass sie zur Ausfuhr von Material in oder gegen die Filterbahnrichtung läuft und insbesondere mit unterschiedlichen Reinigungsstegen, Bürsten, Noppen, etc. ausgerüstet ist.

Gemäß einer bevorzugten Ausführungsform erstreckt sich der Wirkungsbereich der Ausführeinheit über die gesamte Breite der Filterposition, so dass ein Filterband über seine gesamte Breite von Verunreinigungen befreit werden kann. Es ist auch von Vorteil, wenn die Ausführeinheit und insbesondere auch der Primärschmelze-Abfluss in dem Bereich der Filterkammer angeordnet ist, in dem das Filterband aus diesem austritt. Auf diese Weise ist es möglich, Verunreinigungen dort, wo sie sich besonders negativ auswirken, nämlich beim Herausschieben des Filterbandes, zu entfernen.

Gemäß einer bevorzugten Ausführungsform, die einen kontinuierlichen Betrieb selbst bei einem kompletten Filterwechsel erlaubt, sind zwei Bandfilter bzw. Gruppen von Bandfiltern in Form eines Bandfiltersystems jeweils mittels eines schaltbaren Ventils mit einem gemeinsamen Schmelzekanal dermaßen verbunden, dass in dem einen Zustand des schaltbaren Ventils die Schmelze durch den ersten Bandfilter bzw. die erste Gruppe von Bandfiltern läuft und in dem anderen Zustand des schaltbaren Ventils die Schmelze durch den zweiten Bandfilter bzw. die zweite Gruppe von Bandfiltern läuft.

Bevorzugt ist das Ventil so ausgestaltet, dass ein paralleler Betrieb möglich ist. Es können auch drei oder mehr Filter über solche Ventile parallel zu schalten, so dass stets mindestens einer der Filter einen Schmelzefluss gewährleistet.

In einer weiteren bevorzugten Ausführungsform können zwei oder mehr Bandfilter übereinander oder nebeneinander in Serie angeordnet sein, sodass der Ausfluss des vorangehenden mit dem Zufluss des nachfolgenden verbunden ist und die Schmelze sukzessive durch die zwei oder mehr Bandfilter hindurchgeführt wird.

Dabei wird vorzugsweise ein einziges Filterband zumindest für zwei oder auch für alle in Serie geschalteten Bandfilter verwendet. Es ist aber auch möglich für jeden Bandfilter ein eigenes Filterband bereitzustellen.

Alternativ oder ergänzend kann ein Schmelzespeicher vorgesehen sein, der insbesondere Teil des Bandfiltersystems ist. Solche Schmelzespeicher können vor und/oder hinter einem Bandfilter oder auch mehreren Bandfiltern positioniert sein.

Zum Wechsel des verschmutzten Filterbandes wird erfindungsgemäß eine Vorrichtung benutzt, die in Form eines Greifwerkzeugs ausgeführt ist. Diese Vorrichtung wird im Folgenden als Lineareinheit bezeichnet.

Die Betätigung des Lineareinheit kann mit mindestens einem bevorzugt zwei Führungssystem/en, wie einer Säule, einem Gleitprofil, einem Führungsprisma und dergleichen hydraulisch oder pneumatisch über einen Zylinder oder Teleskopzylinder, der parallel in der Zugrichtung oder gegen die Zugrichtung angeordnet ist, oder über einen Hydro-, Druckluft- oder Elektromotor, mittels Seilzug oder Spindel angetrieben sein. Die Anordnung gegen die Zugrichtung ist besonders platzsparend, die Baugröße der Filtriervorrichtung kann dabei noch kleiner gehalten werden.

Dabei wird über einen Hebemechanismus in der Vorwärtsbewegung ein Greifwerkzeug geöffnet und über das aus dem Filter herausragende Filterband geschoben.

Der Greifmechanismus kann nun über gesonderte Betätigungselemente beispielsweise hydraulisch, pneumatisch, elektrisch geschlossen werden oder aber auch durch eine spezielle Hebelmechanik im Zuge der Rückwärtsbewegung des in der Lineareinheit angebrachten Schlittens das Filterband greifen und entsprechend durch den Filterwechsler ziehen. Anstelle einer geraden Bahn kann die Lineareinheit aber auch nach oben oder unten gekrümmt verlaufen um beispielsweise eine platzsparende Anordnung zu realisieren.

Je nach verwendetem Filterband und Verschmutzungsgrad kann das Greifwerkzeug entweder mit festen oder mit wechselbaren Haltebacken ausgerüstet sein. Diese Haltebacken können gerade oder gerundet mit Noppen, Rippen, Spikes, Klemmkanten aus unterschiedlichen Materialen, wie Metallen Kunststoffen und dergleichen versehen sein.

Weiters können die Haltebacken über die ganze Breite des Filterbandes verlaufen oder aber beispielweise bei höheren Verschmutzungen das Filterband nur punktuell an mindestens einem Punkt, beispielsweise in der Mitte, greifen.

Ferner ist es möglich, dass je nach Einsatzzweck die Haltebacken beheizt oder gekühlt werden um das Greifen zu verbessern. Die Heizung oder Kühlung kann elektrisch oder über ein Wärmeträgermedium erfolgen.

Je nach Ausführung kann vor dem Greifen eine Einheit montiert sein, in der das Filterband z.B. durch einen festen oder beweglichen mechanischen Abstreifer aus Metall, Keramik, Kunststoff, mit oder ohne Antihaftbeschichtung oder eine Abstreifwalze oder Schnecke aus Metall, Kunststoff, Keramik mit und ohne Antihaftbeschichtung angeordnet sein.

Zusätzlich kann in dieser Einheit das Filterband mit der darauf befindlichen Schmelze beispielsweise über Kontaktplatten oder durch Mediumkühlung, z. B. mit Luft beheizt oder gekühlt werden. Idealerweise wird die viskose oder hochviskose Flüssigkeit am Filterband mittels eines gezielten Kühlluftstroms abgekühlt und erstarrt dabei zumindest vor dem Greifen teilweise. Die Abluft kann dabei gemeinsam mit aus der Filtermasse austretenden Dämpfen gezielt abgesaugt oder nach außen geleitet werden.

Das Filterband kann anschließend einem Aufwickler zugeführt werden oder abgeschnitten werden.

In einer bevorzugten Ausführung ist das Schneidelement direkt hinter dem Greifelement angeordnet und schneidet das Filterband beim Greifen oder kurz nach dem Greifen ab.

In einer weiteren Ausführung wird das Band erst in der hinteren Endposition des Greifwerkzeugs oder auf dem Weg dorthin abgeschnitten.

Das Schneidwerkzeug kann dabei unabhängig von der Bewegung des Greifelements beispielsweise durch mechanische Kulissen oder elektrisch oder hydraulisch betätigt werden.

In einer anderen Ausführung wird die Schneidmechanik, ähnlich wie auch die Greifmechanik, mittels Hebel über die Lineareinheit bei der Vor- oder Rückwärtsbewegung über die Lineareinheit betätigt.

Die Trennvorrichtung kann dabei je nach Art des Filterbandes gerade oder in unterschiedlichen Raumwinkeln zum Schneiden bewegt werden.

Als Schneidvorrichtung kommen gerade oder gekrümmte Messer oder Schneidkanten mit und ohne Gegenmesser, glatt oder gezackt, die gegebenenfalls auch antihaftbeschichtet sind, zum Einsatz. Als Antihaftbeschichtung kommen vorzugsweise Teflon, keramische oder metallische Schichten oder deren Kombinationen in Frage.

In einer anderen Ausführung werden rotierende Scheiben oder Messer aus Metall, Keramik oder Verbundmaterialen, glatt oder gezackt quer oder in einem Winkel über das Filterband bewegt und dieses damit durchtrennt.

Weiters könnten auch andere Schneidmedien wie Wasserstrahl, Plasmastrahl, Laser, Flämmen, und dergleichen eingesetzt werden.

Während des Greif- bzw. Ziehvorgangs des verschmutzten Filterbandes wird neues Filterband durch die Eintrittsöffnung nachgeführt. Das Filterband wird dabei auf einer dem Fachmann bekannten Abwickelvorrichtung bereitgestellt. Diese besteht aus einem Rahmen für ein oder mehrere Siebandrollen, einem einfachen Mechanismus zur Einstellung der Spannung, einem Meterzähler und einer Vorrichtung zum Verbinden eines neuen Filterbandes durch Schweißen, Spleißen, Nähen, Verpressen etc. Dadurch wird ermöglicht, wenn eine Rolle zu Ende geht, ohne Unterbrechung eine neue Bandrolle anzuhängen.

Es kann bei mehreren Filterbändern, insbesondere bei parallel oder aber auch in Serie angeordneten Filterkammern für jedes Filterband jeweils eine eigene Vorrichtung zur Entnahme des Filterbandes bereitgestellt werden. Dies ist insbesondere vorteilhaft, da dabei jedes Filterband sofort bei Erreichung des kritischen Verschmutzungsgrades aus der Filterkammer entfernt werden kann und dadurch ein vollkommen kontinuierlicher Betrieb sichergestellt wird. Alternativ kann eine einzige Vorrichtung zur Entnahme bereitgestellt werden, die durch z.B. geeignete lineare Führungseinheiten oder Manipulationssysteme jeweils zu dem zu entnehmenden Filterband bewegt wird.

Bei der Verwendung eines einzigen Filterbandes für zwei oder mehrere in Serie geschaltete Bandfilter, ist die Austrittsöffnung des Filterbandes bevorzugt im letzten Bandfilter vorgesehen. Die Vorrichtung zur Entnahme des verschmutzten Filterbandes, also die Linearabzugseinheit ist dabei in umgekehrter Reihenfolge des Schmelzflusses anzuordnet. Dadurch wird zuerst neues Filterband in den letzten Bandfilter eingebracht und anschließend sukzessive in die jeweils vorhergehenden Bandfilter.

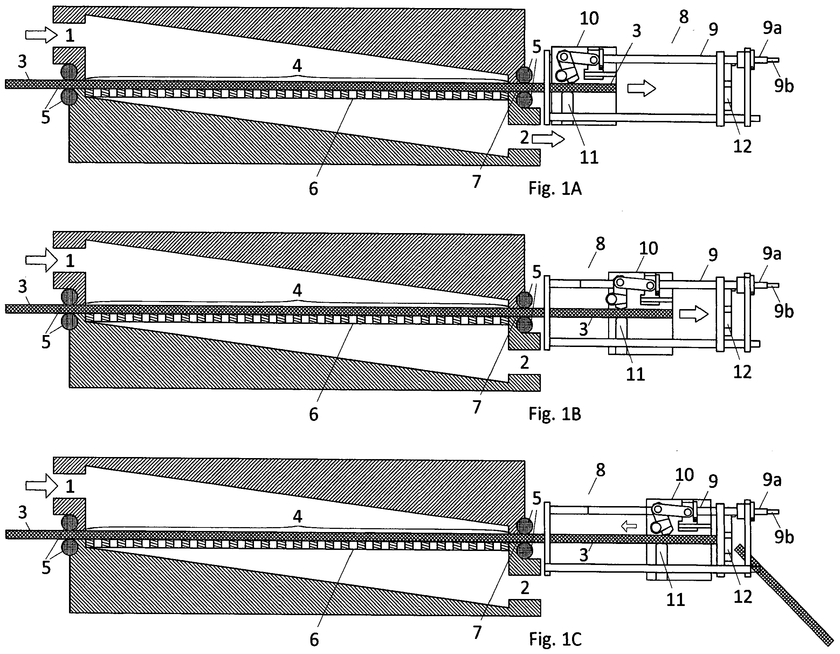

In den Figuren 1 bis 3 ist eine beispielhafte Ausführungsformen der erfindungsgemäßen Vorrichtung schematisch dargestellt.

Die Darstellung der Vorrichtung ist nicht maßstabsgetreu.

In den Figuren bedeuten
1 den Zufluss
2 den Abfluss
3, 3a das Filterband
4 den Bereich in dem die Filtrierung effektiv stattfindet, der sogenannte Filtrierbereich
5 ein Dichtungselement
6 die Stützvorrichtung für das Filterband 3
7 die Austrittsöffnung für das Filterband 3
8, 8a die Linearabzugseinheit
9, 9a und 9b, 19 ein Führungssystem der Lineareinheit
10 das Greifwerkzeug
11 die Haltebacken des Greifwerkzeugs
12, 12 a die Schneidvorrichtung
13, 13 a die Abwickelstation für das Filterband
14, 14a die Filterkammer
15, 15a die Vorspannvorrichtung und Führung für das Filterband
16, 16a die Eintrittsöffnung für das Filterband in die Filterkammer

Figur 1 a zeigt schematisch eine Ausführungsform eines Bandfilters in Seitenansicht mit der angeschlossenen Linearabzugseinheit.

Durch einen Zufluss 1 kann eine Schmelze in einen Innenraum gelangen in Richtung des Pfeils, der durch ein Filterband 3 in zwei Bereiche unterteilt wird, und aus einem Abfluss 2 wieder herausfließen. Das Filterband ist dabei so angeordnet, dass die Schmelze, um vom Zufluss 1 zum Abfluss 2 zu gelangen durch das Filterband fließen muss und nicht auf einem anderen Weg an dem Filterband vorbeifließen kann. Derjenige Bereich des Filterbandes, der von der Schmelze durchflossen werden kann, ist als Filtrierbereich 4 bezeichnet.

Nachdem das Filterband einen Teil der Schmelze gefiltert hat und verschmutzt ist, wird es verschoben, und zwar in Richtung des Pfeils an der Seite des Filterbandes, wobei das Filterband rechts und links noch weiter verläuft, (in der Zeichnung nicht dargestellt), so dass ein sauberer Bereich in den Filtrierbereich gezogen und zur Filtrierung verwendet werden kann. Dichtelemente 5 dichten das Filterband gegen die Wandung der Filterkammer ab, so dass an diesen Stellen keine Schmelze austreten kann. Unter dem Filterband ist eine optionale Stützstruktur 6 zur Stabilisierung des Filterbandes angeordnet.

An der Austrittsöffnung 7 des Filterbandes 3 ist die Linearabzugseinheit 8 positioniert.

Die Linearabzugseinheit besteht aus einem Greifwerkzeug 10 mit Haltebacken 11.

Das Greifwerkzeug 10 wird in dieser Ausführungsform durch ein Führungssystem 9 bestehend aus einem in einem Zylinder 9a angeordneten Rohr 9b realisiert. Das Führungssystem 9 wird durch einen in der Zeichnung nicht dargestellten Antrieb angetrieben.

Das Greifwerkzeug 10 fasst mit Hilfe der Haltebacken 11 das Filterband 3 nach der Austrittsöffnung 7.

Mit Hilfe des, in den Figuren nicht dargestellten Antriebs bewegt das Führungssystem 9 nun das Greifwerkzeug 10 linear in der durch den Pfeil angedeuteten Richtung (Fig. 1b) bis zur Endposition (Fig. 1c).

An der Endposition wird das Filterband durch eine Schneidevorrichtung 12 abgeschnitten. Anschließend wird das Greifwerkzeug 10 durch das Führungssystem 9 wieder in Richtung der Austrittsöffnung 7 für das Filterband 3 bewegt um bei Bedarf wieder verschmutztes Filterband aus der Filterkammer zu entnehmen.

Während des Entnahmevorgangs des Filterbandes 3 wird neues Filterband von einer in den Figuren nicht dargestellten Abwickelvorrichtung außerhalb der Filterkammer nachgeführt.

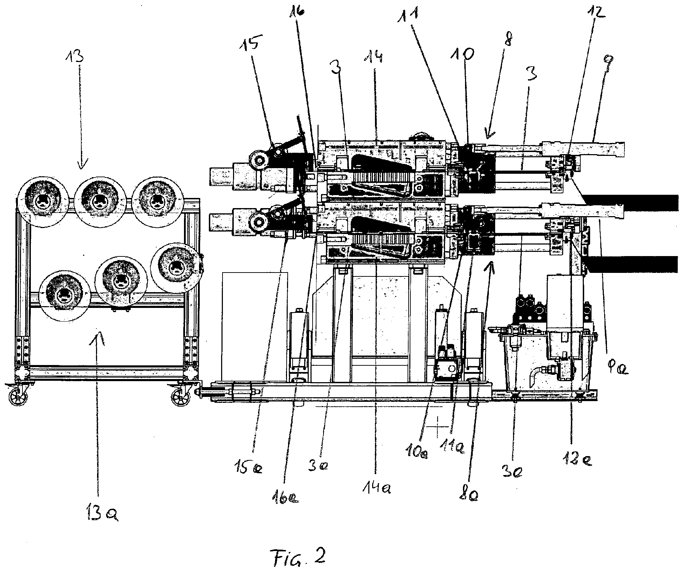

In Fig. 2 ist eine Vorrichtung zum Filtrieren von viskosen oder hochviskosen Flüssigkeiten dargestellt, bei dem zwei Filterkammern 14, 14a parallel geschaltet sind. Ferner sind zwei Linearabzugseinheiten 8, 8a zum Filterbandwechsel, sowie zwei Abwickelstationen, 13 und 13a, für die Filterbänder vorgesehen.

Bei einem Filterbandwechsel in der ersten Filterkammer wird durch ein, in der Zeichnung nicht dargestelltes Ventil die Schmelze, die durch die erste Filterkammer 3 fließt, in die zweite Filterkammer 3a umgeleitet.

Bei dem wie oben beschrieben durchgeführten Filterbandwechsel in der ersten Filterkammer 3 wird das wird Filterband von der Abwickelvorrichtung 13 über die Vorspannvorrichtung 15 durch die Eintrittsöffnung 16 in die Filterkammer nachgeführt. Das aus der Filterkammer 14 entnommene Filterband 3 wird dabei durch die Schneidvorrichtung 12 abgeschnitten.

Nach dem Filterbandwechsel wird die Schmelze wieder durch die erste Filterkammer geleitet, anschließend ist in analoger Weise ein Filterbandwechsel in der zweiten Filterkammer möglich, wobei das Filterband von der Abwickelvorrichtung 13a über die Vorspanneinrichtung 15a durch die Eintrittsöffnung 16a nachgeführt wird und das aus der Filterkammer entnommene Filterband 3a durch die Schneidevorrichtung 15a abgeschnitten.

## Patentansprüche

1. Filtriervorrichtung zum Filtrieren von viskosen oder hochviskosen Flüssigkeiten umfassend
- mindestens eine Zuführungseinheit für die viskose oder hochviskose Flüssigkeit,
- einen von Wandungen umschlossenen Innenraum, der einen Zufluss und mindestens einen Abfluss für die viskose oder hochviskose Flüssigkeit aufweist, wobei der Bereich des Zuflusses und der Bereich des Abflusses durch ein Filterband getrennt sind.
- eine Zuführungsvorrichtung für das Filterband, die auf der Seite des Zuflusses situiert ist, wobei für die Zuführung eine in der Wandung vorgesehene Zutrittsöffnung vorgesehen ist,
- eine Vorrichtung zur Entnahme des Filterbandes auf der der Zuführung des Filterbandes gegenüberliegenden Seite, wobei für die Entnahme eine in der Wandung des Innenraums vorgesehene Austrittsöffnung vorgesehen ist, wobei die Vorrichtung zur Entnahme in Form eines Greifwerkzeugs ausgeführt ist, das eine Linearbewegung ausführt.

2. Vorrichtung nach Anspruch 1, **dadurch gekennzeichnet, dass** die Entnahmeeinheit für Filterband als Greifwerkzeug ausgeführt ist

3. Vorrichtung nach einem der Ansprüche 1 oder 2, **dadurch gekennzeichnet, dass** das Greifwerkzeug mit mindestens einem bevorzugt zwei Führungssystem/en hydraulisch oder pneumatisch über einen Zylinder oder Teleskopzylinder, angeordnet ist, über einen Hydro-, Druckluft- oder Elektromotor, mittels Seilzug oder Spindel angetrieben wird.

4. Vorrichtung nach Anspruch 3, **dadurch gekennzeichnet, dass** als Führungssystem eine Säule, ein Gleitprofil oder Führungsprisma vorgesehen ist.

5. Vorrichtung nach einem der Ansprüche 1 bis 4, **dadurch gekennzeichnet, dass** das Greifwerkzeug mit Haltebacken versehen ist, die gerade oder gerundet mit Noppen, Rippen, Spikes oder Klemmkanten ausgeführt sind.

6. Vorrichtung nach einem der Ansprüche 1 bis 5, **dadurch gekennzeichnet, dass** die Vorrichtung zur Entnahme des Filterbandes eine Schneidvorrichtung aufweist.

7. Vorrichtung nach Anspruch 6, **dadurch gekennzeichnet, dass** die Schneidvorrichtung als Messer, Schneidkante, Scheibe, als Laser, Wasserstrahl, Plasmastrahl oder Flämmvorrichtung ausgeführt ist.

8. Vorrichtung nach einem der Ansprüche 1 bis 7, **dadurch gekennzeichnet, dass** vor der Austrittsöffnung des Filterbandes eine Kühlzone vorgesehen ist.

9. Vorrichtung nach einem der Ansprüche 1 bis 8, **dadurch gekennzeichnet**, das der Bereich des Zuflusses mindestens eine Flüssigkeitszuführung und mindestens einen Flüssigkeitsabfluss als Primärschmelze-Abfluss umfasst und der Bereich des Auslasses keine Flüssigkeitszuführung und mindestens einen Flüssigkeitsabfluss umfasst

10. Vorrichtung nach einem der Ansprüche 1 bis 9, **dadurch gekennzeichnet, dass** vor dem Primärschmelzeabfluss eine Austragseinheit für die Primärschmelze vorgesehen ist.

11. Vorrichtung nach einem der Ansprüche 1 bis 10, **dadurch gekennzeichnet, dass** zwei oder mehr Bandfilter übereinander oder nebeneinander in Serie angeordnet sind, so dass der Ausfluss des vorangehenden mit dem Zufluss des nachfolgenden verbunden ist und Schmelze sukzessive durch zwei oder mehr Bandfilter hindurchgeführt wird, wobei bevorzugt ein einziges Filterband für mehrere oder alle in Serie geschalteten Bandfilter verwendet wird.

12. Vorrichtung nach einem der Ansprüche 1 bis 10 , **dadurch gekennzeichnet, dass** zwei oder mehr Bandfilter übereinander oder nebeneinander parallel angeordnet sind, wobei sie mittels eines schaltbaren Ventils mit einem gemeinsamen Schmelzekanal dermaßen verbunden sind, dass in dem einen Zustand des schaltbaren Ventils die Schmelze durch den ersten Bandfilter oder die erste Gruppe von Bandfiltern läuft und in dem anderen Zustand des schaltbaren Ventils die Schmelze durch den zweiten Bandfilter oder die zweite Gruppe von Bandfiltern läuft.

13. Verfahren zum Filtrieren von viskosen oder hochviskosen Flüssigkeiten umfassend folgende Verfahrensschritte:
- Zuführen eines Filterbandes in eine Filtriervorrichtung, die mindestens eine Zuführungseinheit für die viskose oder hochviskose Flüssigkeit, einen von Wandungen umschlossenen Innenraum, der einen Zufluss und mindestens einen Abfluss für die viskose oder hochviskose Flüssigkeit aufweist, wobei der Bereich des Zuflusses und der Bereich des Abflusses durch ein Filterband getrennt sind, eine Zuführungsvorrichtung für das Filterband, das auf der Seite des Zuflusses situiert ist, wobei für die Zuführung eine in der Wandung vorgesehene Zutrittsöffnung vorgesehen ist, eine Vorrichtung zur Entnahme des Filterbandes auf der der Zuführung des Filterbandes gegenüberliegenden Seite, wobei für die Entnahme des Filterbandes eine in der Wandung des Innenraums vorgesehene Austrittsöffnung vorgesehen ist, aufweist,
- tangentiales Anströmen der viskosen oder hochviskosen Flüssigkeit in eine Filtriervorrichtung in der Weise, dass die Filterfläche zumindest nahezu gleichmäßig und vollflächig von der viskosen oder hochviskosen Flüssigkeit bedeckt und mit den Verunreinigungen belegt wird,
- Abführen der durch die Filtervorrichtung hindurchgetretenen viskosen oder hochviskosen Flüssigkeit,
- Ab- oder Rückführen der nicht durch das Filtersystem hindurchgetretenen viskosen oder hochviskosen Flüssigkeit,
- Entnahme des verschmutzen Filterbandes durch die Vorrichtung zur Entnahme des Filterbandes, die in Form eines Greifwerkzeugs ausgeführt ist_wobei die Entnahme durch eine Linearbewegung des Greifwerkzeugs erfolgt
- ggf. Abschneiden des Filterbandes durch eine Schneidvorrichtung
- Abführung und/oder Entnahme von nicht durch das Filtersystem hindurchgetretenen Verunreinigungen.

14. Verfahren nach Anspruch 13, **dadurch gekennzeichnet, dass** die viskose oder hochviskose Flüssigkeit über zwei oder mehrere parallel geschaltete Filtriervorrichtungen geführt wird und die Entnahme des Filterbandes durch eine einzige oder durch zwei oder mehrere dem entsprechenden Filterband zugeordnete Vorrichtungen zur Entnahme erfolgt.

15. Verfahren nach Anspruch 13, **dadurch gekennzeichnet, dass** die viskose oder hochviskose Flüssigkeit über zwei oder mehrere in Serie geschaltete Filtriervorrichtungen geführt wird, wobei der Abfluss der ersten Filtriervorrichtung in den Zufluss der zweiten Filtriervorrichtung bildet.

16. Verfahren nach Anspruch 15, **dadurch gekennzeichnet, dass** für zwei oder mehrere oder alle in Serie geschalteten Filtriervorrichtungen ein einziges Filterband verwendet wird.

17. Verfahren nach Anspruch 16, **dadurch gekennzeichnet, dass** die Vorrichtung zur Entnahme des Filterbandes in umgekehrter Reihenfolge bezüglich des Flusses der viskosen oder hochviskosen Flüssigkeit angeordnet ist, sodass neue, saubere Bereiche des Filterbandes zuerst in die bezüglich des Flusses der viskosen oder hochviskosen Flüssigkeit letzte Filtriervorrichtung eingebracht wird und dann sukzessive weiter zu den vorderen.
